# EUROPEAN PATENT SPECIFICATION

(11) **EP 3 408 109 B1**
(45) Date of publication and mention of the grant of the patent: **12.10.2022**
(21) Application number: 16703248.1
(22) Date of filing: 29.01.2016
(51) Int. Cl.: B60B 9/16, B60C 7/14, B60C 19/08, B29D 30/02, B29C 33/60, B29C 33/62, C08K 5/00

(54) **ELECTRICALLY CONDUCTIVE MOLD RELEASE FOR NON-PNEUMATIC TIRES AND MANUFACTURING METHOD**
ELEKTRISCH LEITFÄHIGES FORMTRENNMITTEL FÜR LUFTLOSE REIFEN UND HERSTELLUNGSVERFAHREN
LUBRIFIANT DE MOULE ÉLECTROCONDUCTEUR POUR DES BANDAGES NON PNEUMATIQUES ET PROCÉDÉ DE FABRICATION

(43) Date of publication of application: 05.12.2018
(73) Proprietor: Compagnie Générale des Etablissements Michelin, 63000 Clermont-Ferrand (FR)
(72) Inventor: NAROWSKI, Brian, Greenville, SC 29605 (US)
(74) Representative: Casalonga
(86) International application number: PCT/US2016/015649
(87) International publication number: WO 2017/131742

(56) References cited:
- EP-A1- 0 659 529
- WO-A1-88/00876
- DE-A1- 19 625 091
- US-A- 2 267 503
- US-A- 2 324 589
- US-A- 4 734 232
- US-A1- 2015 034 225

## Description

### BACKGROUND OF THE INVENTION

### Field of the Invention

This invention relates generally to non-pneumatic tires, and more particularly, to molding spokes of a non-pneumatic tire.

### Description of the Related Art

US2015/0034225 relates to a non-pneumatic tire comprising an inner and an outer circumferential portion and a support structure. WO88/00876 relates to an in-mold primer which contains a preferentially adhesive resin also simultaneously serves as a mold release agent.

EP0659529 relates to an aqueous external release agent primarily intended for the manufacture of pneumatic tires. DE19625091 relates to an aqueous external release agent for the production of pneumatic tires. US2267503 relates to wheels made largely from insulating material and provided with means for conducting static electricity from the axle of a vehicle to the ground.

An emerging field in tire development involves the manufacture and use of non-pneumatic or hybrid tires that do not depend solely on pressurized gas to support the tire structurally. As a result, these non-pneumatic tires are not prone to deflation, which otherwise can render a pneumatic tire inoperable. Exemplary non-pneumatic tires arc described in U.S. Pat. No. 7,201,194 (also referred to herein as the '194 Patent), the contents of which arc herein incorporated by reference.

In one example, a non-pneumatic tire includes a tread that is attached to the outward extent of a plurality of spokes, the spokes being spaced apart around a rotational axis of the tire and each of the spokes extending lengthwise in a radial direction from a hub at an inward extent. The spokes arc operably connected to each of the tread and hub by any means known in the art. For example, in certain embodiments, the spokes arc molded with the hub and a shear band is employed to connect the tread to the spokes. Spokes are formed by pouring a molding material, such as a thermosetting material, into a spoke mold where the thermosetting material is cured or hardened. As described by the Abstract and col. 2, lines 28-41 of the '194 Patent, the plurality of spokes support the tire with the ability to deflect or flex. This deflecting or flexing helps the non-pneumatic tire simulate a pneumatic tire.

To prevent build-up of electrical charges that may be generated during land vehicle operation, land vehicles are often grounded by providing an electrically conductive path between the vehicle and the ground. Because non-pneumatic tires with spokes constructed of non electrically-conductive thermosetting materials do not have an electrically conductive path from the tread to the hub, grounding straps arc independently attached to the vehicle, separate from the non-pneumatic tire, for the purpose of providing an electrically-conductive path between the vehicle and the ground. Accordingly, to eliminate the need for grounding straps, there is a need to provide an electrically conductive path in non-pneumatic tires.

### SUMMARY OF THE INVENTION

Embodiments of the present invention include non-pneumatic tires having an electrically conductive path, and methods for forming the same.

Particular embodiments of the present invention include a method for forming a non-pneumatic tire. One step of the method includes providing a spoke mold configured to form one or more spokes of a non-pneumatic tire. The spoke mold may include a mold cavity at least partially defined by one or more molding surfaces. An additional step includes applying a mold release to the one or more molding surfaces wherein the mold release includes an electrically conductive additive. In another step, a thermosetting material is arranged into the molding cavity. The thermosetting material is cured in the mold cavity to form one or more molded spokes of a non-pneumatic tire. The electrically conductive additive of the mold release is embedded within a thickness of each of the one or more molded spokes. The one or more molded spokes may then be removed from the mold.

Additional embodiments of the present invention include a non-pneumatic tire. The non-pneumatic tire includes one or more spokes formed of at least a cured thermosetting material wherein the cured thermosetting material includes an electrically conductive additive. In some embodiments, the electrically conductive additive is arranged within a thickness of at least one of the one or more molded spokes.

The foregoing and other embodiments, objects, features, and advantages of the invention will be apparent from the following more detailed descriptions of particular embodiments of the invention, as illustrated in the accompanying drawings wherein like reference numbers represent like parts of the invention.

### DETAILED DESCRIPTION OF THE DRAWINGS

FIG. **1** is a perspective view of a non-pneumatic tire with molded spokes, according to an embodiment of the present invention.
FIG. **2** is a side sectional view of a molding apparatus comprising a mold for forming the spokes of a non-pneumatic tire, according to an embodiment of the present invention.
FIG. **3** is a perspective view of a bottom mold member of the mold shown in FIG. **2**, according to an embodiment of the present invention.
FIG. **4** is a perspective view of the bottom mold portion shown in FIG. **3** being coated with a mold release that includes an electrically conductive additive, according to an embodiment of the present invention.
FIG. **5** is a perspective view of the coated bottom mold portion shown in FIG. **4**, wherein molding material is arranged within the molding cavity in the bottom mold portion to form spokes with an electrically conductive additive embedded within a thickness of each spoke, according to an embodiment of the present invention.
FIG. **6** is a partial sectional view of the coated bottom mold member of FIG. **4** taken along line **6-6**.
FIG. **7** is a partial sectional view of molded spokes arranged within the bottom mold member as shown in FIG. **5** taken along line **7-7.**
FIG. **8** is a partial sectional view of the molded spokes after having been demolded from the mold and containing electrically conductive additives embedded in the thickness of each spoke, according to an embodiment of the present invention.

### DETAILED DESCRIPTION OF PARTICULAR EMBODIMENTS

The present invention includes methods for molding spokes for a non-pneumatic tire and methods of forming a non-pneumatic tire where one or more spokes of the non-pneumatic tire include electrically conductive materials that were applied in mold release to a mold used to form the one or more spokes. The electrically conductive material may be arranged along an outer (that is, external) surface of each such spoke and/or embedded within a thickness of each such one or more spokes. It is beneficial to arrange the electrically conductive material within the thickness of a spoke, as electrically conductive materials arranged on an outer surface is susceptible to being worn or washed off, or otherwise more easily removed.

In particular embodiments, a non-pneumatic tire comprises a tread for engaging a ground surface and a hub for operably attaching the tire to a land vehicle. Extending in a radial direction between the tread and the hub are a plurality of spokes, each of which form an elongate member. The plurality of spokes are spaced apart around a rotational axis of the hub or more generally of the tire, where that the length of the elongate member extends in the radial direction of the hub or tire. In certain instances, the one or more spokes are configured to deflect during tire operation to provide desired tire performance characteristics. The tread is operably attached to a radially outward extent of the one or more spokes, which are in turn, connected at a radially inward extent to the hub. The hub, which generally forms a ring, is then operably connected to a land vehicle to configure the non-pneumatic tire for use. Attachment of the one or more spokes to the tread and hub may each be achieved by way of any means known in the art. For example, attachment may be achieved by molding the one or more spokes to the hub, which generally forms a ring and which is prepared for suitable bonding to the thermosetting material. In other examples, attachment is achieved using an adhesive and/or mechanical fasteners. In certain embodiments, an outer annular band is located between the radially outward extent of the spokes and the tread, where the spokes are operably attached to the outer annular band. In certain variations, an inner annular band is also arranged at a radially inner extent of the spokes, the spokes being operably attached to the inner band. This inner annular band is then used to attach the tire to a hub. The outer and inner annular bands may be formed separate from the spokes or molded with the spokes by pouring a molding material, such as thermosetting material, for example, into a spoke mold, where the thermosetting material is distributed within the spoke mold and then cured or hardened. The non-pneumatic tire described is by way of example, as other non-pneumatic tires known in the art may be formed using the methods described herein.

As noted above, particular embodiments of the present invention provide a method for forming a non-pneumatic tire having an electrically conductive path. Particular embodiments of such methods include providing a spoke mold configured to form one or more spokes of a non-pneumatic tire. The spoke mold includes a molding cavity at least partially defined by one or more molding surfaces. The molding cavity is formed by two or more separable structures referred to as molding members. Accordingly, the spoke mold comprises a plurality (two or more) separable molding members that form one or more spoke molding cavities. For example, in certain embodiments, a spoke mold includes a first mold half (a first mold member) and a second mold half (a second mold member), which separately or together include or form one or more elongate molding members spaced apart at least in a circumferential direction to form a molding cavity (a spoke molding cavity). Each of the elongate molding members are also referred to herein as a core. Between each of the spaced apart cores are voids forming a portion of the molding cavity and configured to form a spoke upon arranging the first mold half and the second mold half in a mold-closed arrangement. Furthermore, although the embodiments discussed herein focus on molding spokes for the non-pneumatic tire, the present invention is also applicable to forming other portions of a non-pneumatic tire, such as the hub, tread, and a band (referred to herein also as a shear band) for use in connecting the tread to the spokes, for example.

Because each molded spoke is prone to adhering to any molding surface of the molding cavity, a mold release is applied to the molding surfaces of the molding cavity to improve demolding of each molded spoke. Otherwise, the spokes may become distorted or damaged, resulting in an undesirable and non-uniform appearance. Therefore, the methods described above include applying a mold release to the one or more molding surfaces of the molding cavity. A mold release may be of any composition known in the art such that a film is formed on the surface of the one or more molding surfaces. In one particular embodiment, the mold release is silicon-based. The mold release may be applied to the one or more molding surfaces using any known technique(s), such as spraying, brushing, injecting, submerging, and atomizing, for example.

The mold release applied to the molding cavity and one or more molding surfaces therein includes an electrically conductive additive. Moreover, it is appreciated that one or more electrically conductive additives may be added. The electrically conductive additives may form any known electrically conductive material that facilitates the flow of a current through material by means of electrical conductivity. An example of an electrically conductive additive includes carbon black.

After the mold release is applied to one or more molding surfaces defining the molding cavity, a thermosetting material is arranged within the molding cavity. The thermosetting material is arranged in the molding cavity to form the spokes of a non-pneumatic tire, and upon being deposited in the molding cavity, and/or during curing, the mold release and the electrically conductive additives are intermixed with the thermosetting material. It is appreciated that the thermosetting material may comprise any desired thermosetting material. An example of a thermosetting material includes polyurethane. In addition, a combination of thermosetting materials may be used that is suitably durable and strong to support the loads applied to the tire. The thermosetting material may be added to the spoke mold by using any known process(es) and/or mechanism(s) known in the art, which includes pouring and injecting. By further example, the thermosetting material may be added through one or more pouring slots extending into the one or more cavities. The one or more pouring slots may be provided at any location on the perimeter of the spoke mold. By further example, one or more pouring slots may be provided at an upper platen, a lower platen, a mold ring, and/or a mold cap. The one or more pouring slots may then be sealed during curing after the thermosetting material has been added.

Such methods further include curing the thermosetting material within the mold cavity to form one or more molded spokes of a non-pneumatic tire. The step of curing may be achieved using any known process(es) and/or mechanism(s). For example, in certain instances, heat is supplied to the mold and transferred to the thermosetting material, such that the thermosetting material cures at a desired rate. In certain embodiments, centrifugation is performed (that is, the mold is spun) to cause the thermosetting material to move or migrate to fill the cavities configured to form each of the one or more spokes and/or to remove air bubbles entrapped during pouring.

As a result of curing the thermosetting material within the spoke mold, the electrically conductive additive from the mold release is embedded within a thickness of at least one of the one or more molded spokes. The thickness of each molded spoke is defined by the molding cavity. The embedded electrically conductive additive is positioned inward from any outer (external) surface of a corresponding spoke formed by a molding surface of the mold. Accordingly, the electrically conductive additive is embedded within a thickness of the thermosetting material. By embedding the electrically conductive additive into the thermosetting material of a spoke, the electrically conductive additive will not affect the bulk properties of the molded spoke . Additionally, the electrically conductive additive may also be affixed to an outer (exterior) surface of a molded spoke. In these various embodiments, the electrically conductive additives provide an electrically conductive path along the length of a spoke, so to create an electrically conductive path extending between the tread and hub of a non-pneumatic tire. This eliminates the need for the use of grounding straps or reduces the number of straps required for a vehicle. After demolding the one or more spokes, the non-pneumatic tire is fully assembled. In particular embodiments, the electrical resistivity of the non-pneumatic tire is at a value less than 1 Giga-ohms. In alternative embodiments, in lieu of or in addition to using the mold release, the electrically conductive additive may be added to the thermosetting material prior to being inserted into the mold or molding cavity. This addition may be achieved during formation of the thermosetting material or thereafter. Also, in addition to, or in lieu of, the methods described above, the electrically conductive additive may be applied directly to an outer surface of a molded spoke of the non-pneumatic tire.

Once the thermosetting material is cured, the one or more spokes of the non-pneumatic tire are removed (demolded) from the spoke mold. Removal may be achieved using any process(es) and/or mechanism(s) known in the art

Particular embodiments of the methods discussed above will now be described in further detail below in association with the figures filed herewith exemplifying the performance of the methods in association with particular embodiments.

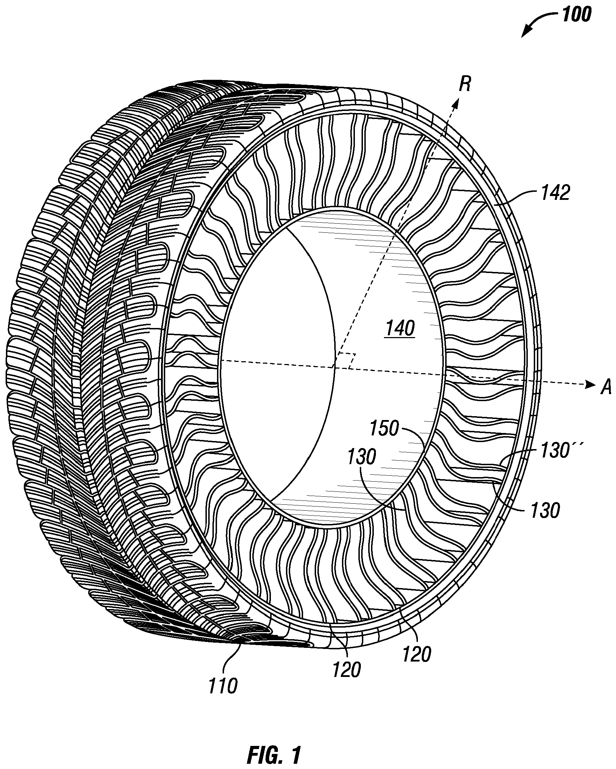

With reference to FIG. **1****,** a non-pneumatic tire is illustrated with an orientation relative a radial direction **R** and an axial direction **A.** The tire **100** comprises a tread **110** that is operably connected to a radially outward extent **120** of spokes **130,** which in turn, are connected to a hub **140,** which is annular, at a radially inward extent **150** of the spokes **130.** The tread and hub are each connected to the spokes by means known in the art, such as by molding to the hub **140**, which have been prepared for suitable bonding to the thermosetting material. For the version of the tire **100** shown, spokes **130** are formed of molded thermosetting material. It can also be seen that in the embodiment shown, spokes **130** are spaced apart in a circumferential direction of the tire, and are optionally grouped in pairs of spokes **130, 130".** The spacing within each pair and the spacing between each adjacent pair may or may not be consistent or the same around the tire. Spokes **130** support the tire **100** in tension near the top of the tire **100** and not in compression. Instead, the spokes **130** at the bottom of the tire near the contact patch, which is where the tread **110** of the tire **100** contacts the road, compress or buckle easily. This helps the tire to simulate the pneumatic support function of a pneumatic tire. An outer band, or shear band, **142** is provided to connect the radially outer extent of the spokes **130** to the tire tread **110.**

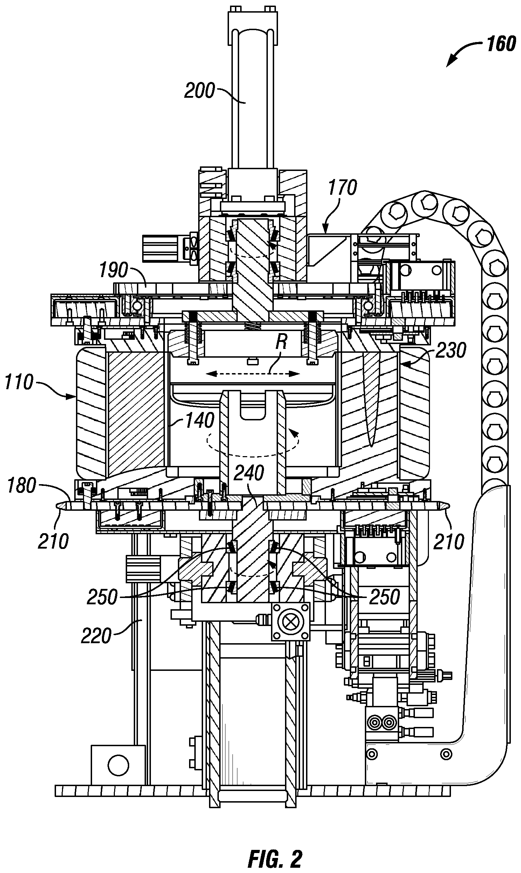

Referring now to an exemplary embodiment in FIG. **2****,** a molding apparatus **160** is shown for at least forming the spokes **130** of FIG. **1****.** The molding apparatus **160** includes a vertical mold press **170** comprising a lower platen **180,** upper platen **190,** hydraulic cylinder **200,** gear **210** and frame **220.** The frame **220** is fixed and the lower platen **180** is translatably fixed in a horizontal plane but is free to translate vertically while the upper platen **190** is pivotally connected to the frame **220** via a pin. The upper platen **190** is moved by the hydraulic cylinder **200** in and out of a parallel alignment with the lower platen **180.** The gear **210** mates with a drive pinion (not shown) powered by a motor (not shown) that can engage or disengage the gear **210** when it is appropriate to rotate the lower platen **180** and mold **230,** which is affixed thereto, to form the spokes **130.** It is contemplated that the upper platen **190** could be translatably connected to the frame **220** and could be moved by means other than hydraulic, such as pneumatic, mechanical or other means commonly known in the art. Likewise, the rotation of the lower platen **180** could be achieved by way of other means known in the art such as by an electric motor that is directly coupled to the shaft **240** to which the lower platen 180 is attached. The translation of the lower platen can be achieved using the same methods mentioned previously for moving the upper platen **190.** Roller bearings **250** are also provided to guide the rotation of the lower platen **180** and to minimize the friction associated with its rotation.

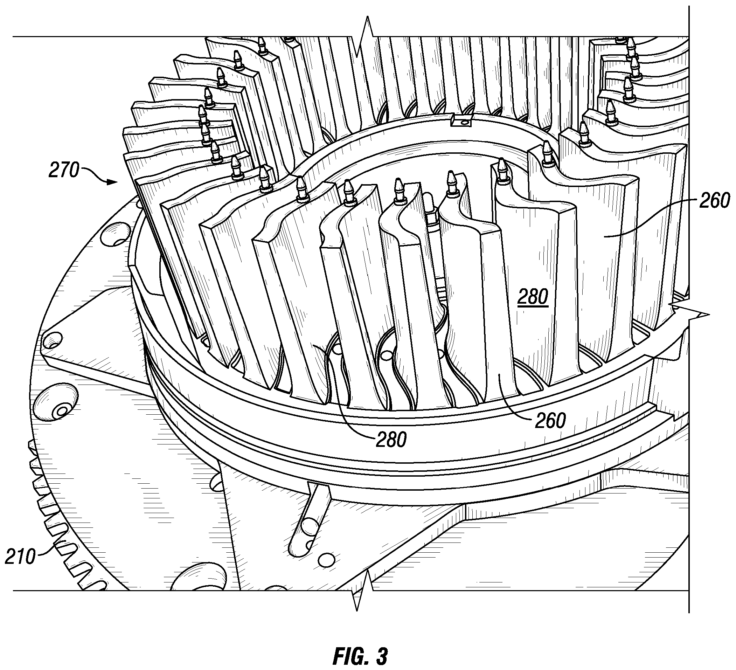

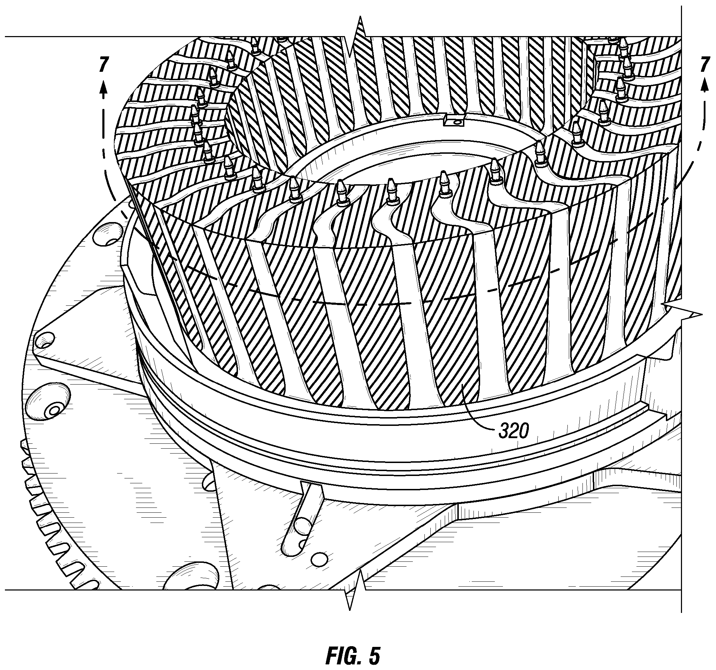

The mold apparatus may be used in the following manner to create the spokes of the tire. First, an outer ring or cap of the mold is removed so to access the inner cavity of the mold. The mold may receive the inward extent **150** of the spokes (*i.e.*, hub or wheel of the tire) and the outward extent **120** of the spokes (*i.e.*, the outer annular portion of the tire, a tread receiving portion, a tread, etc.). Mold cores (as depicted in FIG. **3**), which are elongate molding members, at least partially define cavities configured to form the spokes within the molding cavity, and by doing so, extend between the outward extent **120** of the spokes and the inward extent **150** of the spokes. Caps may be used to secure the thermosetting material (as depicted in FIG. **5**) within the mold. The mold may be rotated as the thermosetting material is poured into the mold by a nozzle (not shown) through a pouring slot (not shown). The pouring slot is open to the molding cavity (as depicted in FIG. 3). The rotation of the mold, or centrifugation, causes the thermosetting material to fill the molding cavity, or the spoke region, and heat is supplied to the mold and transferred to the thermosetting material. The heat helps the thermosetting material to harden and cure by keeping it warm. The thermosetting material forming the spokes may extend from the hub or wheel of the tire to the tread of the tire, allowing the spokes to bond to the hub or wheel and tread during the curing process.

Turning to FIG. **3****,** the exemplary mold comprises two mold halves **270**, a second mold half and a first mold half (one of which is illustrated by FIG. 3). In using the term halves, the meaning does not necessarily connote equal halves, although it is possible that the halves can be equal halves. Arranged within one or both mold halves are mold cores **260**, which are elongate molding members, for use in forming cavities for molding the spokes. One or both of the inner and outer annular bands of the tire may optionally be molded with the spokes in the mold. Mold cores **260** found on a bottom of mold half **270** are shown and form the spokes and inside surfaces of the annular bands. The molding surfaces **280** of the mold core form the spokes themselves. The mold cores coming from the lower mold half interarticulate with similarly configured mold cores coming from the upper mold half so that the thickness of the spokes remain constant. These mold cores may have additional surfaces for forming the inside surfaces of the annular bands.

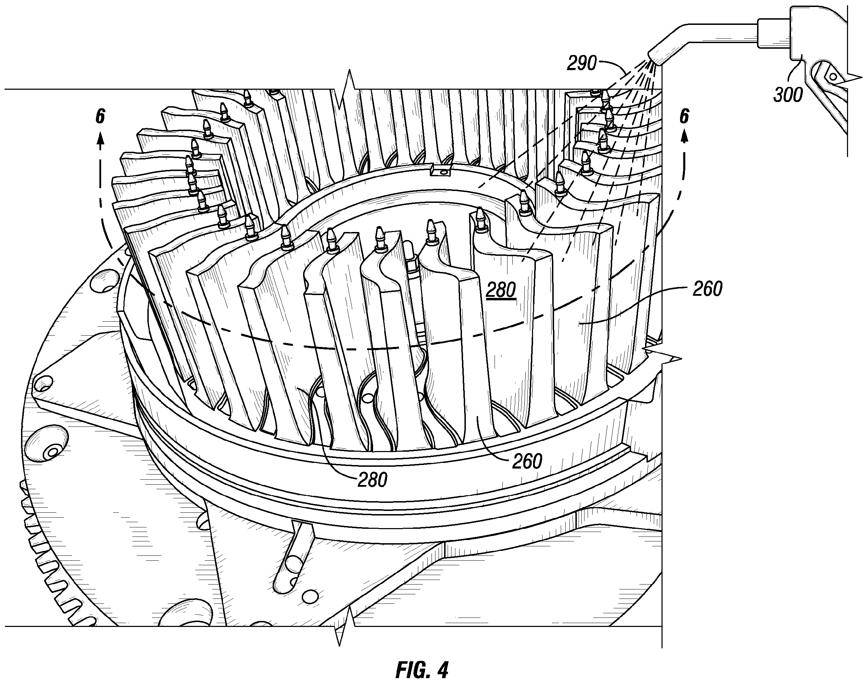

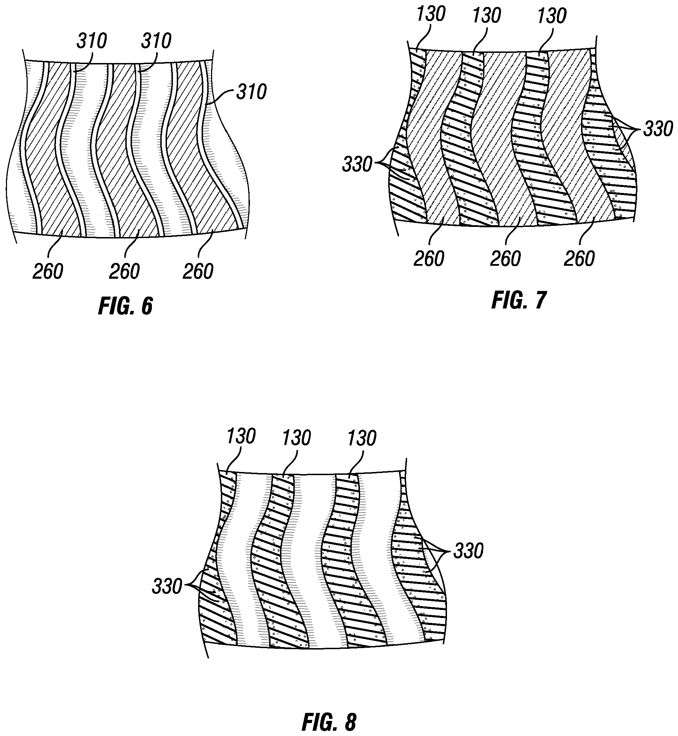

FIG. **4** illustrates the mold cores **260** wherein a mold release **290** is applied to the mold cores **260** and molding surfaces **280**. In this embodiment, the mold release **290** is sprayed on the mold cores **260**, including the molding surfaces **280**, using a spray nozzle **300**. Once applied, the mold release **290** forms a film on the molding surfaces **280** of the mold cores **260**. In the present invention, the mold release **290** comprises an electrically conductive additive which is included within the film formed on the molding surfaces **280** of the mold cores **260**. FIG. 6 is a sectional view of the spoke mold with the mold release **290** forming a film **310** on the molding surfaces **280** of the mold cores **260**.

Turning to FIG. **5**, a thermosetting material **320** is added to the spoke mold and fills the voids or cavities between each mold core **260**. As indicated above, for the version of the tire **100** illustrated in FIG. **1****,** the spoke region comprising the spokes **130** are formed by pouring a thermosetting material into a rotational mold where the thermosetting material is spread via centrifugation and then cured or hardened. The thermosetting material is cured within the spoke mold to form the molded spoke region of the non-pneumatic tire. Upon adding the thermosetting material to the spoke mold, the mold release **290**, comprising the electrically conductive additive, mixes with the thermosetting material. This mixing may occur immediately, upon implementation of the centrifugal action before or during curing, or during curing, or any combination thereof. Once cured, the electrically conductive additive is embedded in the thickness of the cured thermosetting material. This provides an electrically conductive path through the spoke region of the non-pneumatic tire. In other words, this provides an electrically conductive path from the tread to the hub.

FIG. 7 illustrates a sectional view of the spoke mold with the spokes **130** formed between mold cores **260**. The electrically conductive additive **330** is illustrated as embedded within the thermosetting material forming the spokes **130.** Turning to FIG. **8**, a sectional view of a spoke region is further illustrated after removal from the spoke mold. Again, the electrically conductive additives **330** is illustrated as embedded within the thickness of the spokes **130.**

The terms "comprising," "including," and "having," as used in the claims and specifications herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i.e.*, not required) feature of the invention.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments unless otherwise noted.

## Claims

1. A method for forming a non-pneumatic tire (100) comprising:
providing a spoke mold (230) configured to form one or more spokes (130) of the non-pneumatic tire (100), the spoke mold (230) including a mold cavity at least partially defined by one or more molding surfaces (280);
applying a mold release (290) to the one or more molding surfaces (280), the mold release (290) including an electrically conductive additive (330);
arranging a thermosetting material into the molding cavity;
curing the thermosetting material within the mold cavity to form one or more molded spokes (130) of the non-pneumatic tire (100), such that the electrically conductive additive (330) of the mold release (290) is intermixed within a thickness of each of the one or more molded spokes (130) at a location within the thickness adjacent to an outer surface of each corresponding molded spoke (130) and thereby forming an electrically conductive path along each corresponding molded spoke (130); and,
removing the one or more molded spokes (130) from the mold (230).

2. The method of claim 1, wherein the electrically conductive additive (330) is also affixed to the outer surface of the thermosetting material of the one or more molded spokes (130).

3. The method of claim 1, wherein the mold release (290) is silicon-based.

4. The method of claim 1, wherein the mold release (290) is applied by at least one of spraying, brushing, injecting, submerging, or atomizing.

5. The method of claim 1, wherein the thermosetting material is polyurethane.

6. The method of claim 1, where the one or more molded spokes (130) are characterized as having an electrical resistivity equal to or less than 1 Giga-ohms.

7. A non-pneumatic tire (100) comprising:
one or more molded spokes (130) formed of a cured thermosetting material, the cured thermosetting material intermixed with a mold release (290) containing an electrically conductive additive (330), where the electrically conductive additive (330) is arranged within a thickness of at least one of the one or more molded spokes (130) at a location within the thickness adjacent to an outer surface of the at least one spoke (130) and thereby forming an electrically conductive path along each corresponding molded spoke (130).

8. The non-pneumatic tire (100) of claim 7, wherein the thermosetting material is polyurethane.

9. The non-pneumatic tire (100) of claim 7, wherein the electrically conductive additive (330) is also affixed to the outer surface of the thermosetting material of the one or more molded spokes (130).

10. The non-pneumatic tire (100) of claim 7, where the electrically conductive additive (330) is embedded in the molded thermosetting material and is characterized as having an electrical resistivity equal to or less than 1 Giga-ohms.

## Patentansprüche

1. Verfahren zum Herstellen eines nicht-pneumatischen Reifens (100), umfassend:
Bereitstellen einer Speichenform (230), die dafür ausgelegt ist, eine oder mehr Speichen (130) des nicht-pneumatischen Reifens (100) zu bilden, wobei die Speichenform (230) einen Formhohlraum umfasst, der zumindest teilweise durch eine oder mehr formgebende Flächen (280) festgelegt wird;
Anwenden einer Entformungshilfe (290) auf die eine oder mehr formgebenden Flächen (280), wobei die Entformungshilfe (290) ein elektrisch leitfähiges Additiv (330) enthält;
Anordnen eines wärmehärtenden Materials im Formhohlraum;
Härten des wärmehärtenden Materials im Formhohlraum, um eine oder mehr geformte Speichen (130) des nicht-pneumatischen Reifens (100) zu bilden, sodass das elektrisch leitfähige Additiv (330) der Entformungshilfe (290) in einer Dicke von jedem des einen oder der mehreren geformten Speichen (130) an einem Ort in der Dicke angrenzend an eine Außenfläche jeder geformten Speiche (130) durchmischt wird und daher einen elektrisch leitfähigen Pfad entlang jeder entsprechenden geformten Speiche (130) bildet; und
Entfernen der einen oder mehr gebildeten Speichen (130) aus der Form (230).

2. Verfahren nach Anspruch 1, wobei das elektrisch leitfähige Additiv (330) auch auf die Außenfläche des wärmehärtenden Materials der einen oder mehr gebildeten Speichen (130) aufgebracht ist.

3. Verfahren nach Anspruch 1, wobei die Entformungshilfe (290) auf Siliziumbasis ist.

4. Verfahren nach Anspruch 1, wobei die Entformungshilfe (290) durch mindestens eines der folgenden Verfahren aufgebracht wird: Sprühen, Streichen, Einspritzen, Eintauchen oder Zerstäuben.

5. Verfahren nach Anspruch 1, wobei das wärmehärtende Material Polyurethan ist.

6. Verfahren nach Anspruch 1, wobei die eine oder mehr gebildeten Speichen (130) **dadurch gekennzeichnet sind, dass** sie einen elektrischen Widerstand haben, der kleiner oder gleich 1 Gigaohm ist.

7. Nicht-pneumatischer Reifen (100), umfassend:
eine oder mehrere geformte Speichen (130), die aus einem gehärteten wärmehärtenden Material gebildet sind, wobei das gehärtete wärmehärtende Material mit einem Formtrennmittel (290) vermischt ist, das einen elektrisch leitfähigen Additivzusatz (330) enthält, wobei der elektrisch leitfähige Additivzusatz (330) innerhalb einer Dicke von mindestens einer der einen oder mehreren geformten Speichen (130) an einer Stelle innerhalb der Dicke angrenzend an eine Außenfläche der mindestens einen Speiche (130) angeordnet ist und dadurch einen elektrisch leitfähigen Pfad entlang jeder entsprechenden geformten Speiche (130) bildet.

8. Nicht-pneumatischer Reifen (100) nach Anspruch 7, wobei das wärmehärtende Material Polyurethan ist.

9. Nicht-pneumatischer Reifen (100) nach Anspruch 7, wobei der elektrisch leitfähige Additivzusatz (330) auch an der Außenfläche des wärmehärtenden Materials der einen oder mehr gebildeten Speichen (130) aufgebracht ist.

10. Nicht-pneumatischer Reifen (100) nach Anspruch 7, wobei der elektrisch leitfähige Additivzusatz (330) in das geformte wärmehärtende Material eingebettet ist und **dadurch gekennzeichnet ist, dass** er einen elektrischen Widerstand hat, der kleiner oder gleich 1 Gigaohm ist.

## Revendications

1. Procédé pour former un bandage non pneumatique (100) comprenant :
la fourniture d'un moule de rayons (230) configuré pour former un ou plusieurs rayons (130) du bandage non pneumatique (100), le moule de rayons (230) comportant une cavité de moule au moins partiellement définie par une ou plusieurs surfaces de moulage (280) ;
l'application d'un lubrifiant de moule (290) sur les une ou plusieurs surfaces de moulage (280), le lubrifiant de moule (290) comportant un additif électroconducteur (330) ;
l'agencement d'un matériau thermodurcissable dans la cavité de moule ;
le durcissement du matériau thermodurcissable dans la cavité de moule pour former un ou plusieurs rayons (130) moulés du bandage non pneumatique (100), de sorte que l'additif électroconducteur (330) du lubrifiant de moule (290) soit mêlé dans une épaisseur de chacun des un ou plusieurs rayons (130) moulés à un emplacement dans l'épaisseur adjacent à une surface extérieure de chaque rayon (130) moulé correspondant et formant ainsi un chemin électroconducteur le long de chaque rayon (130) moulé correspondant ; et,
le retrait des un ou plusieurs rayons (130) moulés du moule (230).

2. Procédé selon la revendication 1, dans lequel l'additif électroconducteur (330) est également apposé sur la surface extérieure du matériau thermodurcissable des un ou plusieurs rayons (130) moulés.

3. Procédé selon la revendication 1, dans lequel le lubrifiant de moule (290) est à base de silicium.

4. Procédé selon la revendication 1, dans lequel le lubrifiant de moule (290) est appliqué par au moins un parmi une pulvérisation, un brossage, une injection, une immersion ou une vaporisation.

5. Procédé selon la revendication 1, dans lequel le matériau thermodurcissable est du polyuréthane.

6. Procédé selon la revendication 1, où les un ou plusieurs rayons (130) moulés sont **caractérisés en ce qu'**ils présentent une résistivité électrique égale ou inférieure à 1 gigaohm.

7. Bandage non pneumatique (100) comprenant :
un ou plusieurs rayons (130) moulés constitués d'un matériau thermodurcissable durci, le matériau thermodurcissable durci mêlé à un lubrifiant de moule (290) contenant un additif électroconducteur (330), où l'additif électroconducteur (330) est agencé dans une épaisseur d'au moins un des un ou plusieurs rayons (130) moulés à un emplacement dans l'épaisseur adjacent à une surface extérieure de l'au moins un rayon (130) et formant ainsi un chemin électroconducteur le long de chaque rayon (130) moulé correspondant.

8. Bandage non pneumatique (100) selon la revendication 7, dans lequel le matériau thermodurcissable est du polyuréthane.

9. Bandage non pneumatique (100) selon la revendication 7, dans lequel l'additif électroconducteur (330) est également apposé sur la surface extérieure du matériau thermodurcissable des un ou plusieurs rayons (130) moulés.

10. Bandage non pneumatique (100) selon la revendication 7, où l'additif électroconducteur (330) est incorporé dans le matériau thermodurcissable moulé et est **caractérisé en ce qu'**il présente une résistivité électrique égale ou inférieure à 1 gigaohm.
